# EUROPEAN PATENT SPECIFICATION

(11) **EP 3 052 385 B1**
(45) Date of publication and mention of the grant of the patent: **21.02.2018**
(21) Application number: 14784553.1
(22) Date of filing: 30.09.2014
(51) Int. Cl.: B64F 1/36

(54) **SYSTEM AND METHOD FOR CHECKING IN LUGGAGE**
SYSTEM UND VERFAHREN ZUR GEPÄCKABFERTIGUNG
SYSTÈME ET PROCÉDÉ D'ENREGISTREMENT DE BAGAGES

(30) Priority: 04.10.2013 NL 2011558
(43) Date of publication of application: 10.08.2016
(73) Proprietor: Vanderlande Industries B.V., 5466 RB Veghel (NL)
(72) Inventor: BARTELET, Gijsbrecht Jean Marie, NL-5232 JJ 'S-Hertogenbosch (NL)
(74) Representative: Algemeen Octrooi- en Merkenbureau B.V.
(86) International application number: PCT/NL2014/050670
(87) International publication number: WO 2015/050440

(56) References cited:
- WO-A1-2008/082300
- WO-A1-2012/099461
- FR-A1- 2 966 139

## Description

The present invention relates to a system for checking in luggage.

The present invention also relates to a method for checking in luggage, using a system according to the present invention.

The invention relates to so called self-check-in systems, such as disclosed in WO 2012/099461, which is considered to be the closest prior art and discloses all the features of the preamble of claim 1, where passengers can check-in their luggage themselves, without or only with limited assistance of airport personnel. To this end the passenger proceeds to a luggage drop-off station after having checked-in himself at a self-check-in counter. After having identified himself at the luggage drop-off station, the passenger needs to place the luggage at a drop-off location of the drop-off station. Next, the luggage is discharged from the drop-off station, into the luggage sorting system for the purpose of loading the luggage to an airplane with which the passenger is associated.

WO 2012/052400 relates to a baggage placement device for receiving and transferring bags toward a downstream collecting conveyor.

Although the system according to WO 2012/099461 functions satisfactorily, the extent of user-friendliness and reliability of the system can be further improved.

Therefore, an object of the present invention is to provide a system for checking in luggage, which is more user-friendly and reliable.

Said object is achieved by the system for checking in luggage according to claim 1, the system comprising a passenger identification terminal for determining a passenger identification of a passenger, a luggage drop-off station for accepting luggage of the passenger at a drop-off location of the luggage drop-off station, in a luggage acceptance mode, and a conveyor system comprising a discharge conveyor for discharging luggage from the drop-off location, in a luggage discharge mode, and containers having a luggage support surface, wherein the luggage drop-off station comprises, at the drop-off location, a container support element for supporting a container to be loaded with luggage at the luggage drop-off location, which system is characterized in that the container support element is configured for orienting the container such that the container is held under an angle with respect to the horizontal, at least in the luggage acceptance mode.

Due to the provision of the container support element and thereby the fact that the container is presented under the mentioned angle, a passenger will understand that he should place his luggage, such as frequently a suitcase, not upright but in a flat, or lying, orientation in the container, since otherwise the luggage may or will tip over immediately upon placement. Therefore misunderstanding regarding the manner in which to position luggage in the container is prevented or at least reduced. Moreover, signs containing directions for the passenger to this end are not required any more. The flat, or lying, orientation of luggage in the containers increases the reliability of the discharging and the subsequent sorting part of the system, in that it is safeguarded to a larger extent that luggage will remain in the container and not tip over, out of the container, when the container is conveyed for example through a curve of a conveyor such as the discharge conveyor. Also jam of luggage due to luggage being put in the container in an upright orientation is prevented. Therefore, according to the invention a system having an improved user-friendliness and reliability is achieved.

In the luggage acceptance mode, the container is oriented by the container support element such that the luggage support surface is directed towards a front side of the luggage drop-off station, from which front side the passenger is to load luggage in the container. Or, in other words, in use the luggage support surface is oriented towards the passenger, which facilitates an easy placement of a piece of luggage on the support surface of the container.

By "the horizontal" is meant a direction perpendicular to the direction of the force of gravity.

The system may have control means for controlling the system, and in particular for controlling the passenger identification terminal, the drop-off station, and the discharge conveyor.

Preferably the container support element is configured for orienting the container such that the container is held under an angle of about 15 to about 45 degrees, more preferably of about 20 degrees to about 35 degrees, with respect to the horizontal. Said range of the angle of the container is found to be most optimal in terms of preventing that a passenger will at least try to place his piece of luggage in an upright position and in terms of preventing that luggage will slide off the luggage supporting surface.

Preferably the container support element is pivotable about a horizontal pivot axis, between an angled position in which the support element is oriented under said angle with respect to the horizontal, and a neutral position. In the neutral position, the support element is preferably oriented at least substantially horizontal. In an alternative embodiment the sign of the angle in the neutral position may be different from the sign of the angle in the angled position. The angle of the support element in the neutral position may in an embodiment be chosen such that the container can be discharged from the support element under the influence of the force of gravity, preferably assisted by a sliding surface or roller elements forming part of the container support element.

In an embodiment the containers have a length, in a longitudinal direction of the container, and a width, in transverse direction, the width being smaller than the length. The containers preferably having a concave luggage supporting surface. The concavity is preferably only in transverse direction, that means, the supporting surface has a part-cylindrical shape.

It is advantageous if the pivot axis is in line with the longitudinal direction of the container at least when present on the container support element.

In a highly preferred embodiment of the system, the luggage drop-off station comprising an opening having a gate which is movable between an open position in which the gate allows entrance, via the opening, to the drop-off location, for accepting luggage of the passenger, in the luggage acceptance mode, and a closed position in which the gate closes off the opening and blocks entrance to the drop-off location, in the luggage discharge mode.

In an embodiment of the system, at least when a container is present on the container support element, an edge of the container closest to the front side of the luggage drop-off station is situated lower in the angled position of the container support element than in the neutral position thereof.

Preferably, the pivot axis extends in line with the direction of discharge of the container from the luggage drop-off location.

It is preferred if the system comprises, at the drop-off location, a conveyor forming the container support element, which conveyor is connected to the luggage discharge conveyor, for the purpose of at least discharging to the luggage discharge conveyor a container onto which luggage is loaded at the drop-off location. Preferably, the conveyor forming the support element is configured such that it can be driven in two directions.

In an embodiment, the system further comprises a container supply conveyor for supplying containers to the luggage drop-off location.

In an embodiment, the container supply conveyor is connected to the luggage drop-off station via a buffer unit for buffering several empty containers to be supplied to the drop-off station. The buffer unit is preferably a stacker unit for buffering in vertical direction several empty containers to be supplied to the drop-off station.

Preferably, the conveyor is connected to the luggage discharge conveyor via a switch conveyor which is arranged to transfer a container originating from the conveyor to the luggage discharge conveyor in a discharge mode, and which is movable between the discharge mode and a supply mode in which it is arranged to transfer a container from the container supply conveyor to the conveyor.

In an advantageous embodiment, the container support element is part of a lift unit, for moving the container support element in a vertical direction to and from the drop-off location.

Preferably, the container support element is at the drop-off location in an upper position of the lift unit, and connects to the luggage discharge conveyor in a lower position of the lift unit.

In an embodiment of the system, the containers each have a machine readable tag such as an RFID tag, wherein the system comprises a tag reader for automatically reading the tag of a container which is supplied to or is discharged from the drop-off location of the drop-off station, wherein, preferably, the drop-off station is equipped with the tag reader, for reading the tag of a container at the drop-off location.

The passenger identification terminal is preferably arranged adjacent to the drop-off station. In an alternative embodiment, the passenger identification terminal may be located at a distance from the luggage drop-off station, such as for example on a different location in the same departure terminal of the airport.

The system preferably comprises a labeling station, preferably at the passenger identification terminal, having a label issue terminal for issuing an internationally standardized luggage-label, in dependence of the passenger information.

In an embodiment, the system comprises a presence determination device for determining the presence of luggage in a container. The presence determination device is preferably provided at the drop-off station, for determining the presence of luggage in a container at the drop-off location.

The present invention also relates to a method for checking in luggage of a passenger, using a system according to the invention, the method comprising:
a) determining, using the passenger information terminal, a passenger identification of a passenger,
b) supplying an empty container to the luggage drop-off location of the drop-off station and arranging the container at the drop-off location under an angle with respect to the horizontal,
c) receiving luggage as dropped off by the passenger, in the container at the drop-off location, while the luggage drop-off station is in the luggage acceptance mode,
d) discharging, by the discharge conveyor, the container loaded with the luggage, while the luggage drop-off station is in the luggage discharge mode, wherein during the discharge of the container the angle of the container with respect to the horizontal is changed such that thereby the container is oriented at least substantially horizontal.

Advantages of the method according to the invention are analogous to the above described advantages of the system according to the invention.

Preferably, step b) comprises
- supplying an empty container to the luggage drop-off location of the drop-off station in an at least substantially horizontal orientation, and
- arranging the container at the drop-off location under an angle with respect to the horizontal by means of pivoting about a horizontal pivot axis to an angled position a container support element at the drop-off location on which said empty container is present.

Preferably, during the discharge of step d), the angle of the container is changed at the drop-off location by pivoting said container support element about the pivot axis to the neutral position, after which the container is discharged from the drop-off location. Alternatively the angle of the container with respect to the horizontal is only changed after the container has left the luggage drop-off station.

In an embodiment of the system wherein the luggage drop-off station comprises a gate as described above, the method comprises moving the gate to its open position after an empty container is supplied to the drop-off location during step b), and, preferably, after the above-mentioned pivoting to the angled position of the container support element, and comprises moving the gate to its closed position after luggage has been loaded in the container during step c), and, preferably, before the above-mentioned pivoting to the neutral position of the container support element.

The present invention will now be explained in more detail by a description of several preferred embodiments of systems according to the present invention, with reference to the enclosed schematic figures, in which:
- Figure 1 shows part of a first embodiment of a system according to the invention, in 3-dimensional view,
- Figure 2 shows the system of figure 1 in a different operating mode,
- Figure 3 shows the system of figure 2 into which a suitcase of a passenger is loaded,
- Figure 4 shows a larger part of the system according to claim 1, in a further operating mode,
- Figure 5 shows the system of figure 1 in side view,
- Figure 6 shows a second embodiment of a system according to the invention, in side view,
- Figure 7 shows a third embodiment of a system according to the invention, in side view,
- Figure 8 shows part of a fourth embodiment of a system according to the invention, in 3-dimensional view,
- Figure 9 shows the system of figure 8, in a different operating mode,
- Figure 10 shows part of a fifth embodiment of a system according to the invention, in 3-dimensional view,
- Figure 11 shows part of a sixt embodiment of a system according to the invention, in side view,
- Figure 12 shows part of a seventh embodiment of a system according to the invention, in 3-dimensional view,
- Figure 13 shows the system of figure 12 in plan view, and
- Figure 14 shows part of an eigth embodiment of a system according to the invention, in side view.

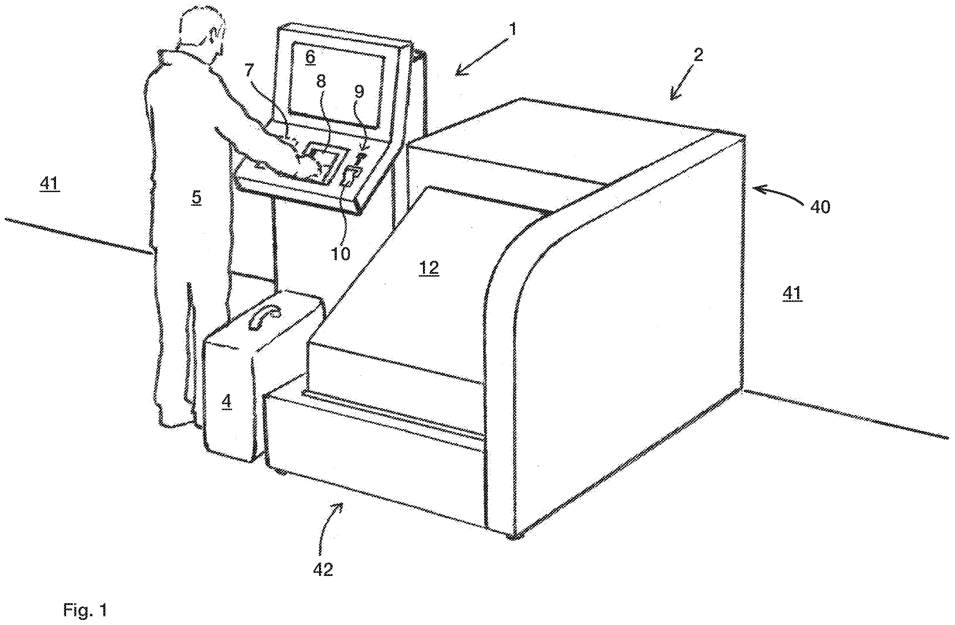

Figures 1 to 5 illustrate a passenger identification terminal 1 and an associated luggage drop-off station 2 together being part of a system 3 for checking in luggage such as a suitcase 4 of a passenger 5, as an embodiment of a system according to the invention. System 3 comprises several identical combinations of a passenger identification terminal 1 and a luggage drop-off station 2 which combinations are located next to each other. System 3 is controlled by a passenger data server.

The passenger identification terminal 1 comprises a screen 6, on which information and questions to be answered for the passenger 5 can be displayed, as well as a keyboard 7 and other input means 8. The keyboard 7 can be used by the passenger 5 to enter plain text data. The other input means 8 provide an alternative means for the passenger 5 to enter data, for instance by inserting a frequent flyer card, a passport or a boarding pass. The passenger identification terminal 1 furthermore comprises a luggage claim tag issuing device 9 which can print and issue luggage claim tags 10. The passenger identification terminal 1 is arranged to determine the passenger identification of passenger 5 on the basis of information input by the passenger 5 via the keyboard 7 or via the other input means 8. Presence of keyboard 7 is not required within the scope of the present invention. The screen 6 is preferably a touch-screen. In an embodiment of a passenger identification terminal within the scope of the present invention, a scanner for a passport and/or boarding pass and/or frequent flyer card, in combination with a touch screen may suffice for the purposes of establishing a passenger identification of the passenger.

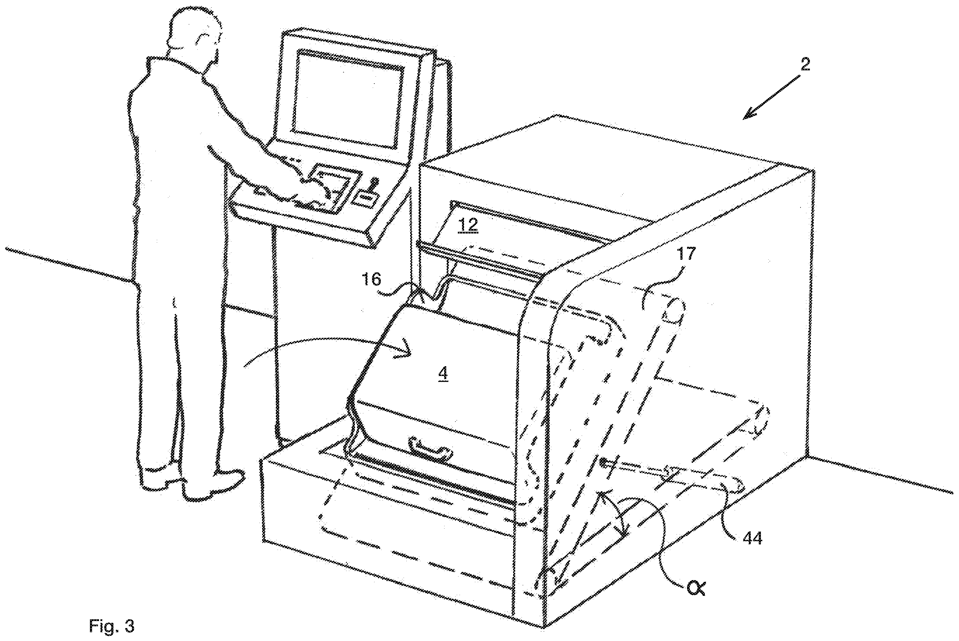

The luggage drop-off station 2 comprises a housing 11 which is open at its back side 40. This back side 40 is not accessible by passenger 5 due to a wall 41. At its front side 42 the luggage drop-off station 2 comprises a gate 12 which is movable between a closed position (illustrated in figure 1) and an open position (illustrated in figure 3). In the open position a drop-off location 13 at the front side 42 of the luggage drop-off station 2 is accessible. When the gate 12 is in the closed position the drop-off location 13 is not accessible as shown in figure 1.

System 3 for checking in luggage comprises a conveyor system 14. This conveyor system 14 comprises a conveyor assembly 15 which comprises a number of individual conveyors as well as containers for luggage in the form of carriers 16. The individual conveyors yet to be discussed are arranged for conveying the carriers 16, either containing a piece of luggage such as suitcase 4 or not.

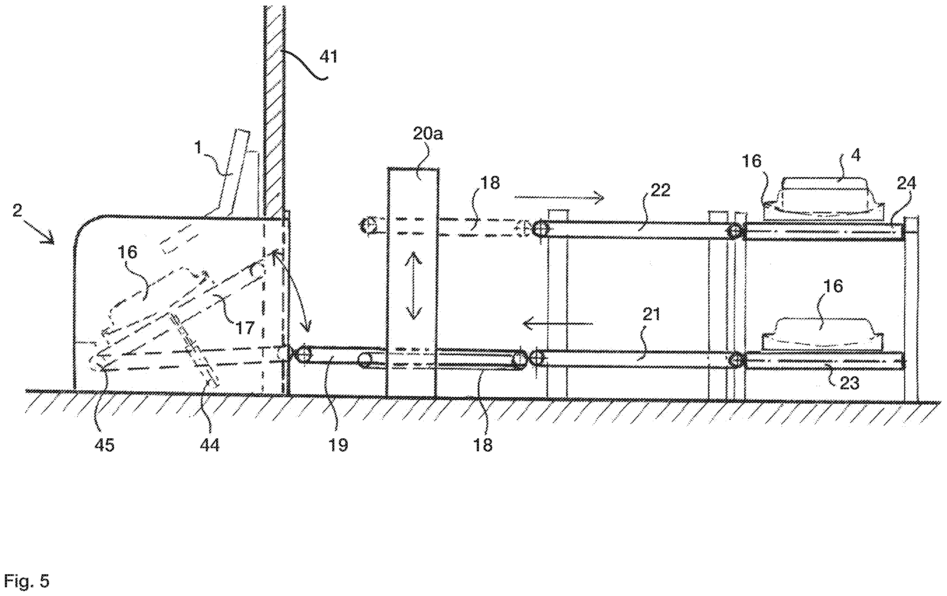

At the drop-off location 13 the conveyor assembly 15 comprises a belt conveyor 17 forming a container support element, which can be driven in two opposite directions. Associated with this belt conveyor 17 is a weighing device (not shown) with which it is possible to weigh the load on the belt conveyor 17. In line with the belt conveyor 17 the conveyor assembly 15 comprises subsequently a switch conveyor having two pairs 18, 19 of conveyor belts 18a, 18b and 19a, 19b. Conveyor belts 19a, 19b are located between conveyor belts 18a, 18b. Conveyor belts 18a, 18b, 19a, 19b have a limited width. Conveyor belts 19a, 19b can be driven in two opposite directions whereas conveyor belts 18a, 18b can only be driven in one direction, viz. in the direction away from the luggage drop-off station 2. Conveyor belts 18a, 18b can be moved vertically along two posts 20a, 20b between a lower position and an upper position, as shown in figure 5. In the lower position the upper parts of the pair of conveyor belts 18a, 18b are positioned slightly lower than the upper parts of the pair of conveyor belts 19a, 19b. In the upper position the conveyor belts 18a, 18b connect to a discharge belt conveyor 22. Below discharge belt conveyor 22 a supply belt conveyor 21 is arranged. Supply belt conveyor 21 can only be driven in one direction, viz. in the direction towards the luggage drop-off station 2, whereas discharge belt conveyor 22 can also only be driven in one direction away from the luggage drop-off station 2.

The supply belt conveyor 21 connects to the pair of conveyor belts 19a, 19b and at one end and to a common supply conveyor 23, which extends perpendicular to the supply belt conveyor 21, at the opposite end. At the opposite end of the common supply conveyor 23 a transfer device (not shown) such as a pusher device is provided which can push an empty carrier 16 from the common supply conveyor 23 onto the supply belt conveyor 21. The discharge belt conveyor 22 connects at one end to the pair of conveyor belts 18a, 18b when in the upper position and at the opposite end to a common discharge conveyor 24 which is arranged above the common supply conveyor 23.

The combination of conveyor belt 17, two pairs of conveyor belts 18a, 18b and 19a, 19b, supply belt conveyor 21 and discharge belt conveyor 22 is provided for each of the neighboring luggage drop-off stations 2, 2' of system 3 for checking-in luggage. Each of the supply belt conveyors 21 and discharge belt conveyors 22 connect to the common supply conveyor 23 and the common discharge conveyor 24 respectively.

In an embodiment of the system 3 according to the invention, the identification terminal 1 comprises a label issuing device which is arranged to issue luggage labels which are internationally standardized by IATA, which luggage labels are to be put on the luggage, preferably by the passenger himself while dropping the luggage off at the drop-off location. The label issuing device may also be arranged for issuing luggage claim tags. Alternatively, at the downstream side of the common discharge conveyor 24, system 3 comprises a labeling station, which is provided with such a label issuing device. In this case issued luggage-labels are to be put on the luggage by airport personnel.

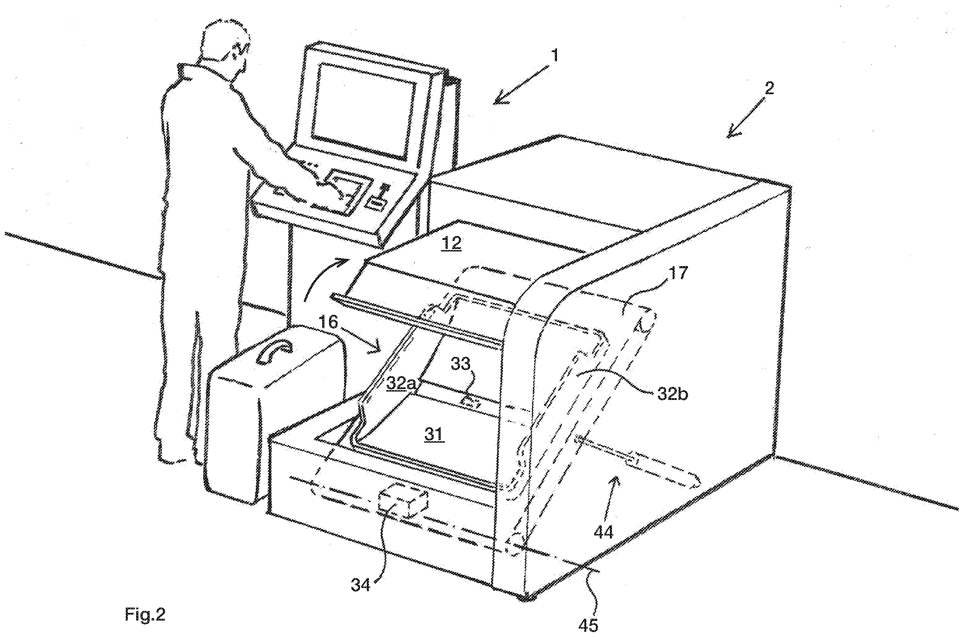

The carriers 16 have a luggage support surface 31 which may be concave. The carriers 16 further have two upstanding wall parts 32a, 32b at its outer ends, in the longitudinal direction of the carrier. The carriers 16 each comprise a RFID-tag 33 which may be integrated in its bottom 31, for example. These RFID-tags 33 provide a unique identification for each carrier 16. The RFID tags can be read by RFID tag readers which as such are known to the skilled person. System 3 comprises such RFID tag readers at each drop-off location 13. Those RFID tag readers are schematically illustrated in figure 2 and indicated by reference number 34.

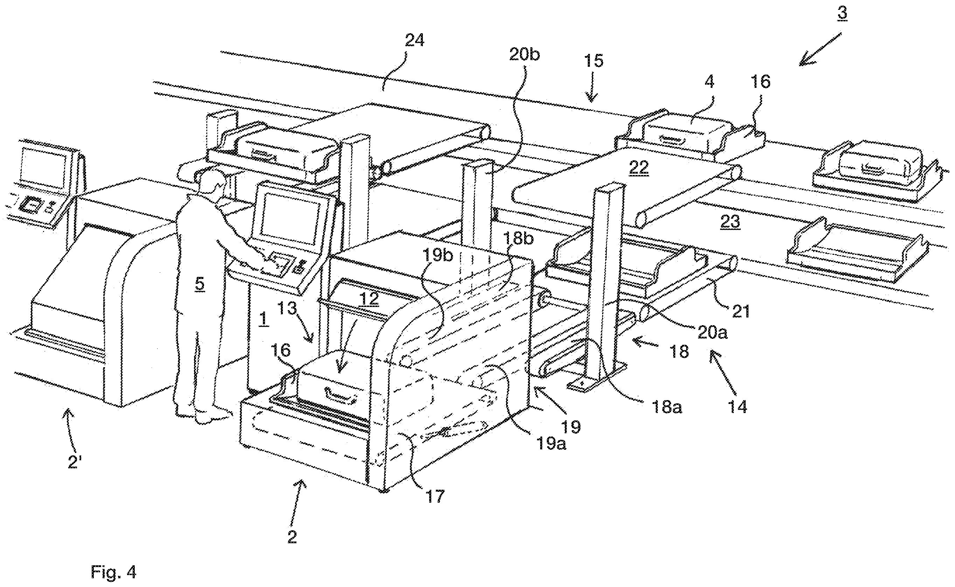

As figure 2 shows, the belt conveyor 17 forming the container support element is pivotable about a horizontal pivot axis 45. The pivot axis 45 extends in longitudinal direction of the carrier 16 and transverse to the conveying direction of conveyor 17. The container support element is pivotable from a neutral position shown in figure 4, over an angle a, to an angled position shown in figures 2 and 3. The pivoting of the belt conveyor 17 is facilitated by pivoting means constituted by two piston-cylinder elements 44, one at each transverse side of the conveyor 17. By extending the piston-cylinder element 44 the conveyor 17 pivots about axis 45 from the neutral to the angled position. In the angled position of the conveyor 17 and with the gate 12 in the open position, the drop-off station is in its luggage acceptance mode. In the neutral position of the conveyor 17 and with the gate in the closed position, the drop-off station 2 is in its luggage discharge mode.

In the following a method according the invention, according to which system 3 may be operated, is described. Passenger 5 has a suitcase 4 which needs to be checked-in. The passenger 5 identifies himself at the passenger identification terminal 1 for example by inserting a frequent flyer card in a slot of the other input means 8, or by holding his passport before a passport reader element forming part of the other input means. The passenger identification terminal 1 forwards the passenger identification to a passenger data server forming part of control means of the system. Optionally the passenger identification terminal 1 may print and issue a boarding pass for the passenger 5 himself. Alternatively passenger 5 has obtained a boarding pass at an earlier stage and at a different location. Passenger 5 will be asked via screen 6 to indicate how many pieces of luggage 4 he would like to check-in. The passenger 5 answers this question for instance via the keyboard 7 or via screen 6 in case screen 6 of the touch-screen type. For each piece of luggage the passenger data server will define an IATA label.

Next, gate 12 will move to its open position. At that time an empty carrier 16 will be present at the drop-off location 13. Under control of the control means, this carrier 16 has been fed to the drop-off location by successively common supply conveyor 23, supply belt conveyor 21, pair of conveyor belts 19a, 19b and belt conveyor 17. For transferring the carrier 16 from the common supply conveyor 23 to the supply belt conveyor 21 a transfer device such as a pusher device is used. Once the carrier 16 has arrived at the drop-off location 13, the container support element in the form of belt conveyor 17 is switched to its angled position, the angle α as indicated in figure 3 being about 25 degrees. After the above-mentioned movement of the gate to the open position, the drop-off station is in the luggage acceptance mode. The RFID tag 33 (being the carrier identification) of the carrier 16 is read by RFID tag reader 34. This carrier identification is forwarded to the passenger data server.

Gate 12, being in its open position, allows passenger 5 to put his (first) piece of luggage 4 in the empty carrier 16 at the drop-off location 13. Due to the carrier 16 being positioned under the mentioned angle a, the passenger 5 will intuitively place his suitcase 4 in a lying orientation on the luggage supporting surface 31 of carrier 16, as shown in figure 3. The weighing device of luggage drop-off station 2 will sense the increase of weight caused by the piece of luggage 4 and will forward this information to the passenger data server. The passenger data server will link the definition of the IATA label as defined by the passenger data server for the piece of luggage 4 in question to the carrier identification. In response to the increased-weight signal, the passenger data server issues the command to the luggage drop-off station to close gate 12 and issues the command to the passenger identification terminal 1 to have a luggage claim tag 10 issued by the luggage claim tag issuing device 9. Passenger 5 takes this luggage claim tag 10 in order to keep it as evidence that he dropped his luggage 4 at the drop-off location 13.

After closure of gate 12 the conveyor 17 is pivoted to its neutral position by the pivoting means 44, in which neutral position the container is oriented at least substantially horizontal, and provided that the pair of conveyor belts 18a, 18b is in its lower position, carrier 16 loaded with a piece of luggage 4, will be discharged for which carrier 16 is conveyed by subsequently belt conveyor 17 and pair of conveyor belts 19a, 19b to a position directly above the pair of conveyor belts 18a, 18b. The pair of conveyor belts 18a, 18b are next moved from their lower position to their upper position. When the pair of conveyor belts 18a, 18b are in the upper position a succeeding empty carrier 16 can be fed to the luggage drop-off location 13. In case the passenger 5 has multiple pieces of luggage 4 to be checked in, the above procedure will be repeated for each piece of luggage 4.

The carrier 16 loaded with the (first) piece of luggage 4 will be discharged further by conveyor belts 18a, 18b, discharge belt conveyor 22 and common discharge conveyor 24 until it arrives at a labeling station. At that position airport personnel will affix an IATA label to the piece of luggage. Alternatively the passenger 5 will affix an IATA label, which is in that case printed by a label issue terminal on or near the passenger identification terminal 1, to the piece of luggage 4 himself, when placing the piece of luggage 4 in the container 16. In that case no additional labeling station is required.

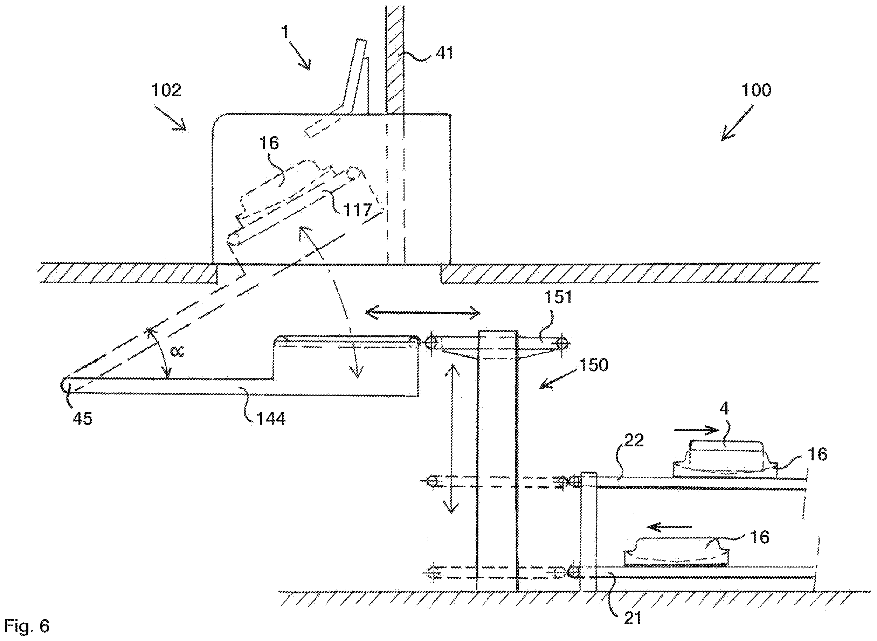

In figure 6 a system 100 being a further embodiment of a system according to the invention is shown. System components with the same or at least substantially the same technical function have been indicated with the same reference numeral used for the description of system 3 according to figures 1 to 5. System 100 comprises a passenger identification terminal 1 and a luggage drop-off station 102 which functions in the same manner as drop-off station 2 as regards interaction with a passenger. The drop-off station 102 has a container support element in the form of a conveyor 117 which is mounted on a tilting platform 144 forming part of tilting means. The platform 144 is pivotable about a pivot axis 45 extending, at least in the view of figure 6, perpendicular to the paper, and in longitudinal direction of the carrier 16. Platform 144 can be pivoted from the shown neutral position upwards to the angled position (shown in dashed lines) over angle α by means of for example a piston-cylinder unit (not shown) similar to piston-cylinder unit 44 as described above. When platform 144 is in the angled position also the container support element 117 is in the angled position and thereby under an angle α of with respect to the horizontal.

After a passenger has placed a piece of luggage on a container 16 present on the conveyor 117, with the gate in the open position and the conveyor 117 in the angled position, the gate closes and the conveyor 117 is pivoted downwards to the neutral position in which conveyor 117 is brought in line with a switch conveyor 151 forming part of a lift unit 150. The switch conveyor 151 can be driven in two directions and can be moved in vertical direction from the position as shown in which it connects to the conveyor 117 to a discharge position in which it is in line with a discharge conveyor 22. In this way a container 16 being filled with a piece of luggage 4 can be discharged from the drop-off station 2. Next, the switch conveyor 151 of the lift unit 150 is moved further downwards until it is brought in line with a supply conveyor 21 for the purpose of supplying an empty container 16 to the drop-off station 102.

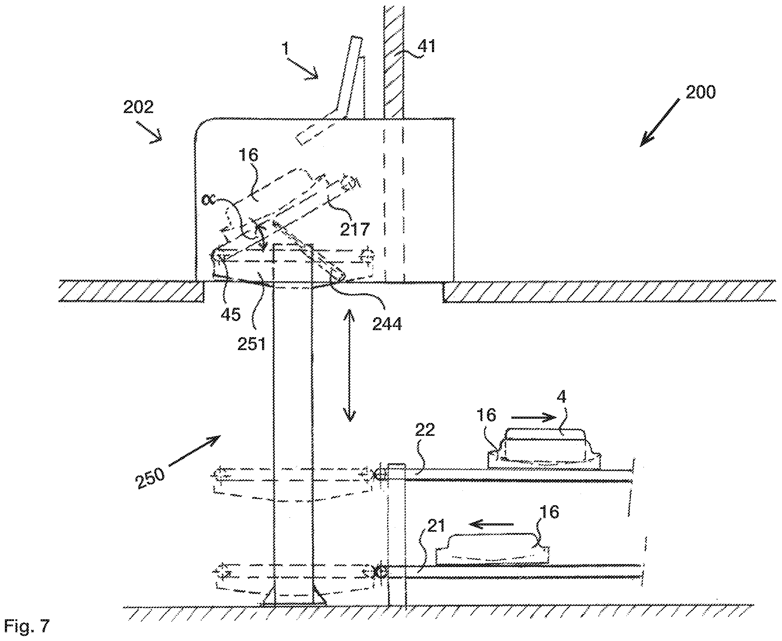

Figure 7 shows a further system 200 having a passenger identification terminal 1 and a luggage drop-off station 202. In system 200, a conveyor 217 forming the container support element of the drop-off station 202 can be pivoted about a horizontal pivot axis 45 with respect to a frame part 251 of a lift unit 250 from the neutral position to the angled position as shown in figure 7. The conveyor 217 forms part of the lift unit 250 by means of which the conveyor 217 can be moved downwards to below the drop-off station 202 for the purpose of either connecting the conveyor 217 to a discharge conveyor 22, in a lower position, for the purpose of discharging a container 16 filled with a piece of luggage for, or, in a still lower position, to a supply conveyor 21 for the purpose of supplying an empty container 16 to the conveyor 217.

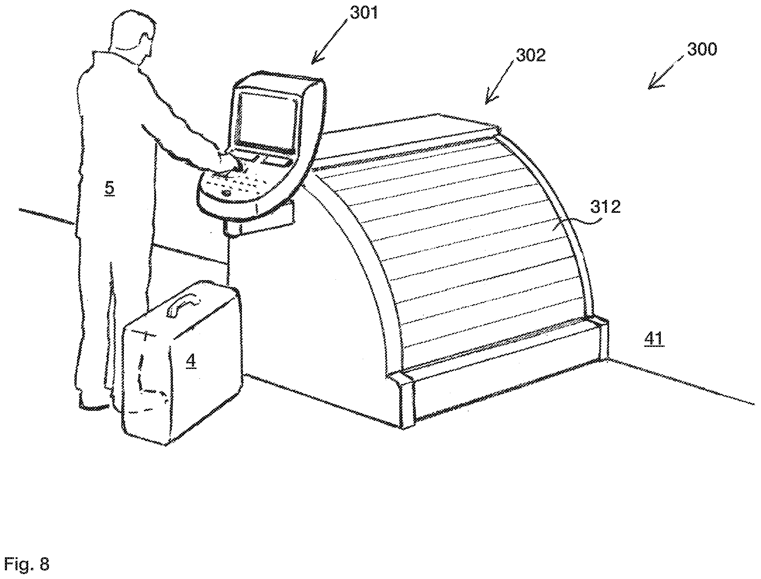

Figure 8 shows a further system 300 comprising a passenger identification terminal 301 which, as regards to the function, corresponds to identification terminal 1 as described above. A luggage drop-off station 302 of system 300 has a gate 312 which functions similar to above described gate 12.

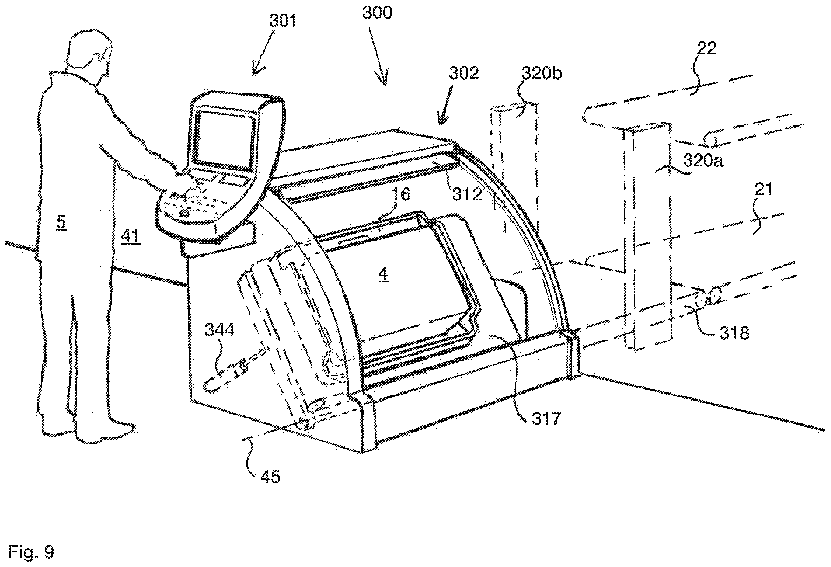

In figure 9 the system 300 is shown with the drop-off station 302 in the luggage acceptance mode in which gate 312 is in the open position and a conveyor 317 forming a container support element is in an angled position. Other than systems 3, 100 and 200, the conveyor 317 of system 300 is pivotable about a pivot axis 45 which extends in line with the discharge direction of the container 16 and thus also in line with the direction of movement of conveyor 317.

After the passenger 5 has placed his piece of luggage 4 in the container 16 as shown in figure 9, the gate 312 closes and the conveyor 317 is pivoted downwards from the angled position as shown in figure 9 to a neutral, horizontal position by means of the pivoting means 344 which are formed by a piston-cylinder unit comparable to the above described piston-cylinder unit 44. Next, the conveyor 317 is driven such that the container 16 and luggage 4 are discharged from the drop-off station 302 onto a switch conveyor 318. Switch conveyor 318 can be driven in two directions and is further movable in vertical direction from a lower position as shown in figure 9 in which it connects the conveyor 317 to a supply conveyor 21, and an upper position for the purpose of transferring a container 16 filled with a piece of luggage from the switch conveyor 318 to a discharge conveyor 22.

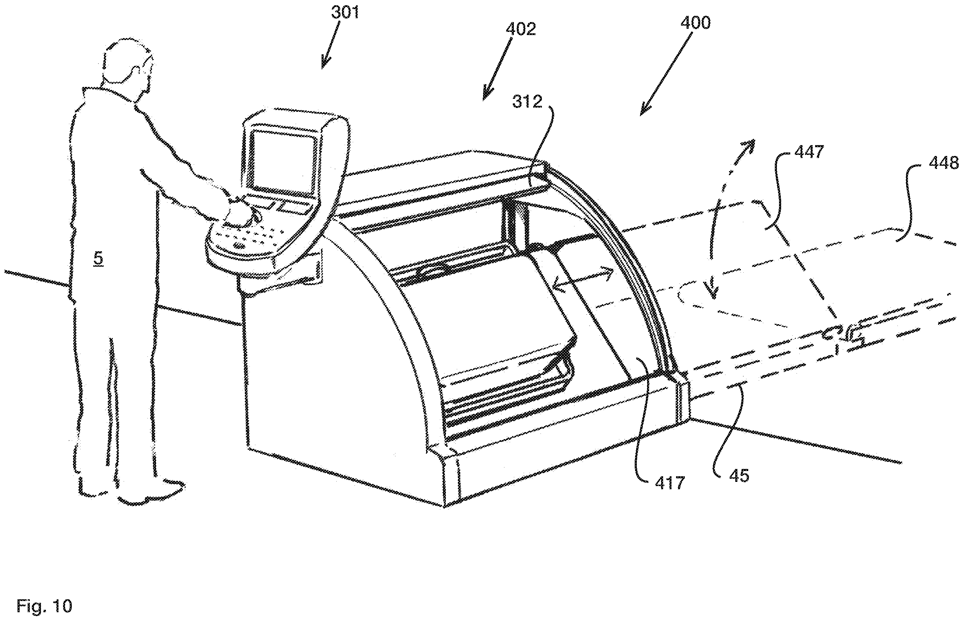

Figure 10 shows a further system 400 according to the invention having a passenger identification terminal 301 and a luggage drop-off station 402. Contrary to the pivotable conveyor 317, a conveyor 417 which can be driven in two directions and which forms a container support element is positioned within the drop-off station 402 under a stationary angle with respect to the horizontal. The conveyor 417 connects to a pivotable conveyor 447 which can be pivoted about a pivot axis 45 extending in the longitudinal direction of the container 16, of the conveying direction of conveyor 417 and of the pivotable conveyor 447 from an angled orientation as shown in figure 10 in which it connects to conveyor 417 to a neutral position in which it connects to a further conveyor 448 which may be formed as a switch conveyor.

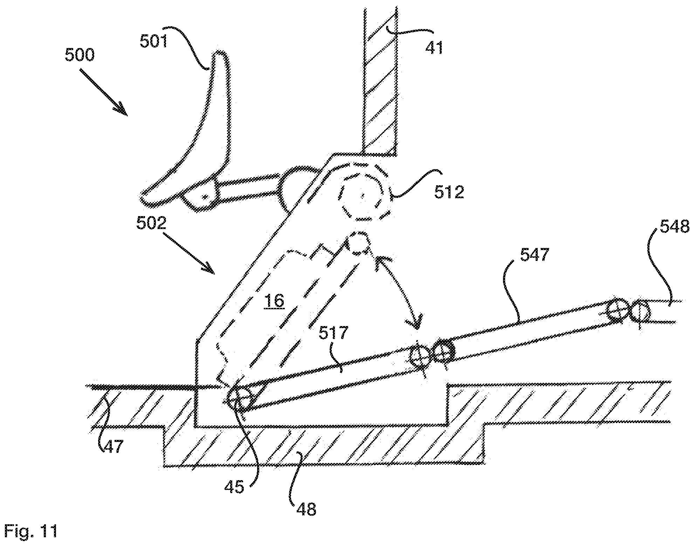

Figure 11 shows a further embodiment of a system 500 having a passenger identification terminal 501 and a drop-off station 502. The drop-off station has a gate 512 similar to the above described gates. A conveyor 517 forming a container support element is pivotable about a pivot axis 45 by means of non-shown pivoting means such as a piston-cylinder combination. The drop-off station 502 is characterized in that the pivot axis 45 is below the floor surface 47 so as to provide a relatively low entry to the drop-off location for the luggage of the passenger. This feature further facilitates an easy placement of a piece of luggage by a passenger in the container at the drop-off location. In the neutral position the conveyor 517 connects to a conveyor 547 which in turn connects to a conveyor 548 which may be a switch conveyor similar to the switch conveyors as described above.

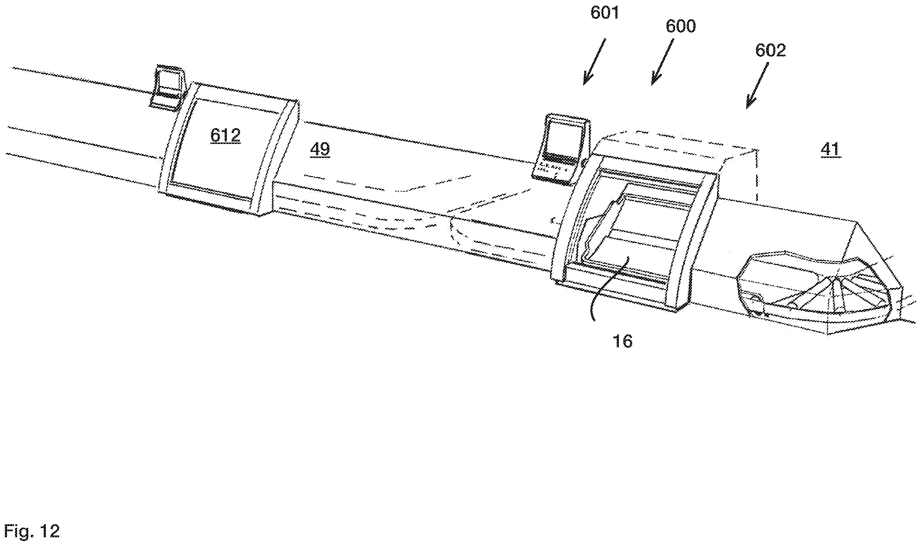

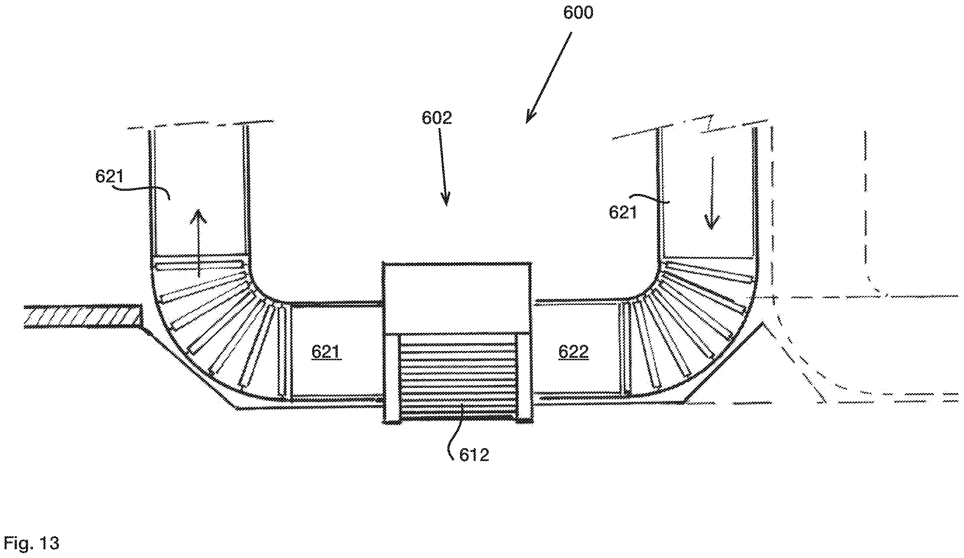

Figures 12 and 13 show a further embodiment 600 of a system according to the invention having a passenger identification terminal 601 and a drop-off station 602. The drop-off station protrudes from a wall 41 of the terminal and is characterized in that the container supply and discharge are in line with each other. Hence, an in-line drop-off station is provided. That means, a container supply conveyor 621 ends up in the drop-off station 602 from, at least in the top plan view of figure 13, from the left side, whereas a discharge conveyor 620 is arranged to discharge containers to the right side from the drop-off station 602. Within the drop-off station 602, a container support element which on the one side connects to the supply conveyor 621 and on the other side connects to the discharge conveyor 622 is pivotable about a horizontal pivot axis being in line with the supply conveyor 621 and discharge conveyor 622 at least at the connection points thereof with the container support element.

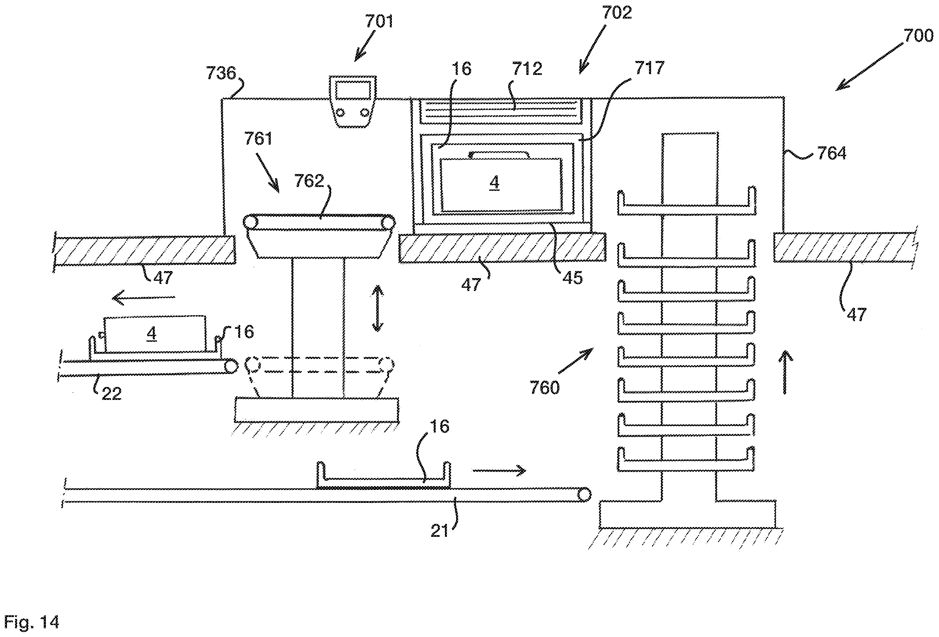

Figure 14 shows a system 700 as a further embodiment system according to the invention has, upstream of a luggage drop-off station 702, adjacent the drop-off station, a container supply unit formed as a container stacker unit 760 in which several empty containers 16 can be buffered, or, stacked, vertically. The conveyor system comprises a supply conveyor 21 which is located below ground surface 47. Supply conveyor 21 connects to a lower entry point of the stacker unit 760 such that empty carriers 16 can be fed into the stacker unit 760. The stacker unit 760 is configured for transporting empty containers upwards to above ground surface 47. From there, the upper container 16 of the stack is moved to the drop-off station 702, to which the stacker connects upstream, such that it comes to rest on the container support element 717. The support element 717 is pivotable about a horizontal pivot axis 45 from a neutral, horizontal position to the angled position as shown in which the support surface of the container faces towards the front side of the drop-off station 702. For completeness sake it is mentioned that the drop-off station 702 is shown from its front side in figure 14.

When gate 712 is in the open position the drop-off station 702 is in its luggage acceptance mode and a passenger can place a piece of luggage in the container 16. After a piece of luggage 4 has been placed in the container 16 and the gate 712 is closed, the container including the piece of luggage is conveyed, by conveyor 717, to a switch conveyor 762 which is connected to a downstream end of conveyor 717. The switch conveyor 762 is part of a lift unit 761 which is configured for moving the switch conveyor 762 vertically from an upper position as shown in which the switch conveyor 762 connects to the support element 717, to a lower position (in dashed lines) in which the switch conveyor 762 connects to a discharge conveyor 21 for discharging a container 16 with a piece of luggage from the drop-off station 702.

The part of the system 700 which is located above floor 47 level is cabinet-like. This means, the top side of the stacker 760 as well as the space above the switch conveyor 762 are covered by cabinet-like elements 764 and 763, respectively. The drop-off station 702 is also enclosed except for the opening of the drop-off station closable by the gate 712. The passenger identification terminal is mounted on the enclosure 763.

## Claims

1. System (3) for checking in luggage (4), comprising
- a passenger identification terminal (1) for determining a passenger identification of a passenger (5),
- a luggage drop-off station (2) for accepting luggage (4) of the passenger (5) at a drop-off location (13) of the luggage drop-off station (2), in a luggage acceptance mode, and
- a conveyor system (14) comprising
- a discharge conveyor (22) for discharging luggage (4) from the drop-off location (13), in a luggage discharge mode, and
- containers (16) having a luggage support surface (31),
wherein the luggage drop-off station (2) comprises, at the drop-off location (13), a container support element (17) for supporting a container (16) to be loaded with luggage (4) at the luggage drop-off location (13),
**characterized in that**
the container support element (17) is configured for orienting the container (16) such that the container (16) is held under an angle (α) with respect to the horizontal, at least in the luggage acceptance mode,
wherein, in the luggage acceptance mode, the container (16) is oriented by the container support element (17) such that the luggage support surface (31) is directed towards a front side (42) of the luggage drop-off station (2), from which front side (42) the passenger (5) is to load luggage (4) in the container (16).

2. System (3) according to claim 1, wherein the container support element (17) is configured for orienting the container (16) such that the container (16) is held under an angle (α) of about 15 to about 45 degrees, more preferably of about 20 degrees to about 35 degrees, with respect to the horizontal.

3. System (3) according to claim 1 or 2, wherein the container support element (17) is pivotable about a horizontal pivot axis (45) between an angled position in which the support element (17) is oriented under said angle (α) with respect to the horizontal, and a neutral position in which the support element (17) is oriented at least substantially horizontal.

4. System (3) according to any one of the preceding claims, wherein the containers (16) have a length, in a longitudinal direction of the container (16), and a width, in transverse direction, the width being smaller than the length, the containers (16) preferably having a concave luggage supporting surface (31).

5. System (3) according to claim 3 and 4, wherein the pivot axis (45) is in line with the longitudinal direction of the container (16) at least when present on the container support element (17).

6. System (3) according to any one of the preceding claims, the luggage drop-off station (2) comprising an opening having a gate (12) which is movable between an open position in which the gate (12) allows entrance via the opening to the drop-off location (13) for accepting luggage (4) of the passenger (5), in the luggage acceptance mode, and a closed position in which the gate (12) closes off the opening and blocks entrance to the drop-off location (13), in the luggage discharge mode.

7. System (3) according to claim 3 or a claim dependent thereof, wherein the pivot axis extends in line with the direction of discharge of the container (16) from the luggage drop-off location (13).

8. System (3) according to any one of the preceding claims, comprising, at the drop-off location (13), a conveyor forming the container support element (17), which conveyor is preferably configured such that it can be driven in two directions, and which conveyor is connected to the luggage discharge conveyor (22), for the purpose of at least discharging to the luggage discharge conveyor (22) a container (16) onto which luggage (4) is loaded at the drop-off location (13).

9. System (3) according to any one of the preceding claims, further comprising a container supply conveyor (21) for supplying containers (16) to the luggage drop-off location (13).

10. System (3) according to claim 8 and claim 9, wherein the conveyor is connected to the luggage discharge conveyor (22) via a switch conveyor (18, 19) which is arranged to transfer a container (16) originating from the conveyor to the luggage discharge conveyor (22) in a discharge mode, and which is movable between the discharge mode and a supply mode in which it is arranged to transfer a container (16) from the container supply conveyor (21) to the conveyor.

11. System (3) according to any one of the preceding claims, wherein the container support element is part of a lift unit (250), for moving the container support element in a vertical direction to and from the drop-off location (13), wherein, preferably, the container support element is at the drop-off location (13) in an upper position of the lift unit (250), and connects to the luggage discharge conveyor (22) in a lower position of the lift unit (250).

12. System (3) according to any one of the preceding claims, wherein the containers (16) each have a machine readable tag such as an RFID tag (33), wherein the system comprises a tag reader (34) for automatically reading the tag (33) of a container (16) which is supplied to or is discharged from the drop-off location (13) of the drop-off station (2), wherein, preferably, the drop-off station (2) is equipped with the tag reader (34), for reading the tag (33) of a container (16) at the drop-off location (13), preferably wherein the system (3) further comprises a presence determination device for determining the presence of luggage (4) in a container (16) at the drop-off location (13).

13. System (3) according to any one of the preceding claims, wherein the passenger identification terminal (1) is arranged adjacent to the drop-off station (2), wherein, preferably, the system (3) further comprises a labeling station having a label issue terminal for issuing an internationally standardized luggage-label, in dependence of the passenger information.

14. Method for checking in luggage (4) of a passenger (5), using a system (3) according any one of the preceding claims, the method comprising:
- determining, using the passenger information terminal (1), a passenger identification of a passenger (5),
- supplying an empty container (16) to the luggage drop-off location (13) of the drop-off station (2) and arranging the container (16) at the drop-off location (13) under an angle (α) with respect to the horizontal,
- receiving luggage (4) as dropped off by the passenger (5), in the container (16) at the drop-off location (13), while the luggage drop-off station (2) is in the luggage acceptance mode,
- discharging, by the discharge conveyor (22), the container (16) loaded with the luggage (4), while the luggage drop-off station (2) is in the luggage discharge mode, wherein during the discharge of the container (16) the angle (α) of the container (16) with respect to the horizontal is changed such that thereby the container (16) is oriented at least substantially horizontally.

## Patentansprüche

1. System (3) zur Abfertigung von Gepäck (4), umfassend
- ein Passagieridentifikationsterminal (1) zur Bestimmung einer Passagieridentifikation eines Passagiers (5),
- eine Gepäckabgabestation (2) zur Annahme von Gepäck (4) des Passagiers (5) an einer Abgabestelle (13) der Gepäckabgabestation (2) in einem Gepäckannahmemodus, und
- ein Fördersystem (14), umfassend
▪ ein Abführfördermittel (22) zum Abführen von Gepäck (4) von der Abgabestelle (13) in einem Gepäckabführmodus, und
▪ Behälter (16), die eine Gepäckauflagefläche (31) aufweisen, wobei die Gepäckabgabestation (2) an der Abgabestelle (13) ein Behälterträgerelement (17) zum Tragen eines Behälters (16), der mit Gepäck (4) an der Gepäckabgabestelle (13) zu beladen ist, umfasst,
**dadurch gekennzeichnet, dass**
das Behälterträgerelement (17) konfiguriert ist zum Ausrichten des Behälters (16), sodass der Behälter (16) wenigstens im Gepäckannahmemodus unter einem Winkel (α) bezüglich der Horizontalen gehalten wird,
wobei der Behälter (16) im Gepäckannahmemodus durch das Behälterträgerelement (17) ausgerichtet wird, sodass die Gepäckauflagefläche (31) in Richtung einer Vorderseite (42) der Gepäckabgabestation (2) gerichtet ist, wobei der Passagier (5) von der Vorderseite (42) Gepäck (4) in den Behälter (16) laden soll.

2. System (3) nach Anspruch 1, wobei das Behälterträgerelement (17) konfiguriert ist zum Ausrichten des Behälters (16), sodass der Behälter (16) unter einem Winkel (α) von etwa 15 Grad bis etwa 45 Grad, vorzugsweise von etwa 20 Grad bis etwa 35 Grad, bezüglich der Horizontalen gehalten wird.

3. System (3) nach Anspruch 1 oder 2, wobei das Behälterträgerelement (17) schwenkbar ist um eine horizontale Schwenkachse (45) zwischen einer angewinkelten Position, in der das Trägerelement (17) unter dem genannten Winkel (α) bezüglich der Horizontalen ausgerichtet ist, und einer neutralen Position, in der das Trägerelement (17) wenigstens im Wesentlichen horizontal ausgerichtet ist.

4. System (3) nach einem der vorherigen Ansprüche, wobei die Behälter (16) eine Länge in einer longitudinalen Richtung des Behälters (16) und eine Breite in transversaler Richtung aufweisen, wobei die Breite kleiner als die Länge ist und wobei die Behälter (16) vorzugsweise eine konkave Gepäckauflagefläche (31) aufweisen.

5. System (3) nach Anspruch 3 und 4, wobei die Schwenkachse (45) in Richtung der longitudinalen Richtung des Behälters (16) liegt, wenigstens wenn sich der Behälter auf dem Behälterträgerelement (17) befindet.

6. System (3) nach einem der vorherigen Ansprüche, wobei die Gepäckabgabestation (2) eine Öffnung mit einer Sperre (12) aufweist, die zwischen einer offenen Position, in der die Sperre (12) den Zugang durch die Öffnung zu der Abgabestelle (13) zur Annahme von Gepäck (4) des Passagiers (5) im Gepäckannahmemodus ermöglicht, und einer geschlossenen Position, in der die Sperre (12) die Öffnung verschließt und den Zugang zu der Abgabestelle (13) im Gepäckabführmodus blockiert, bewegbar ist.

7. System (3) nach Anspruch 3 oder nach einem von diesem abhängigen Anspruch, wobei sich die Schwenkachse in Richtung der Richtung des Abführens des Behälters (16) von der Gepäckabgabestelle (13) erstreckt.

8. System (3) nach einem der vorherigen Ansprüche, umfassend ein das Behälterträgerelement (17) bildende Fördermittel an der Abgabestelle (13), wobei das Fördermittel vorzugsweise so konfiguriert ist, sodass es in zwei Richtungen verfahren werden kann, und wobei das Fördermittel mit dem Gepäckabführfördermittel (22) verbunden ist, wenigstens zu dem Zweck, einen Behälter (16), auf den Gepäck (4) an der Abgabestelle (13) geladen wurde, zu dem Gepäckabführfördermittel (22) abzuführen.

9. System (3) nach einem der vorherigen Ansprüche, weiter umfassend ein Behälterzuführfördermittel (21) zum Zuführen von Behältern (16) zu der Gepäckabgabestelle (13).

10. System (3) nach Anspruch 8 und Anspruch 9, wobei das Fördermittel mit dem Gepäckabführfördermittel (22) über ein Wechselfördermittel (18, 19) verbunden ist, wobei das Wechselfördermittel (18, 19) eingerichtet ist, um in einem Abführmodus einen von dem Fördermittel stammenden Behälter (16) zu dem Gepäckabführfördermittel (22) zu überführen, und wobei das Wechselfördermittel (18, 19) zwischen dem Abführmodus und einem Zuführmodus beweglich ist, in dem es eingerichtet ist, um einen Behälter (16) von dem Behälterzuführfördermittel (21) zu dem Fördermittel zu überführen.

11. System (3) nach einem der vorherigen Ansprüche, wobei das Behälterträgerelement Teil einer Hebeeinheit (250) zum Bewegen des Behälterträgerelements in einer vertikalen Richtung zu der Abgabestelle (13) hin und von der Abgabestelle (13) weg ist, wobei, vorzugsweise, das Behälterträgerelement an der Abgabestelle (13) in einer oberen Position der Hebeeinheit (250) ist und das Behälterträgerelement mit dem Gepäckabführfördermittel (22) in einer unteren Position der Hebeeinheit (250) verbunden ist.

12. System (3) nach einem der vorherigen Ansprüche, wobei die Behälter (16) jeweils ein maschinenlesbares Etikett wie beispielsweise ein RFID-Etikett (33) aufweisen, wobei das System ein Etikettenlesegerät (34) zum automatischen Lesen des Etiketts (33) eines Behälters (16), der der Abgabestelle (13) der Abgabestation (2) zugeführt oder von der Abgabestelle (13) der Abgabestation (2) abgeführt wird, aufweist, wobei, vorzugsweise, die Abgabestation (2) ausgestattet ist mit dem Etikettenlesegerät (34) zum Lesen des Etiketts (33) eines Behälters (16) an der Abgabestation (13), vorzugsweise wobei das System (3) weiter eine Anwesenheitsbestimmungsvorrichtung zur Bestimmung der Anwesenheit von Gepäck (4) in einem Behälter (16) an der Abgabestation (13) aufweist.

13. System (3) nach einem der vorherigen Ansprüche, wobei das Passagieridentifikationsterminal (1) neben der Abgabestation (2) angeordnet ist, wobei, vorzugsweise, das System (3) weiter eine Kennzeichnungsstation aufweist, die ein Kennzeichenausgabeterminal umfasst zur Ausgabe von international standardisierten Gepäckkennzeichen in Abhängigkeit der Passagierinformation.

14. Verfahren zur Abfertigung von Gepäck (4) eines Passagiers (5), unter Verwendung eines Systems (3) nach einem der vorherigen Ansprüche, wobei das Verfahren die folgenden Schritte umfasst:
- Bestimmen einer Passagieridentifikation eines Passagiers (5) unter Verwendung des Passagieridentifikationsterminals (1),
- Zuführen eines leeren Behälters (16) zu der Gepäckabgabestelle (13) der Abgabestation (2) und Anordnen des Behälters (16) an der Abgabestelle (13) unter einem Winkel (α) bezüglich der Horizontalen,
- Annehmen von Gepäck (4), das von dem Passagier (5) abgegeben wurde, in dem Behälter (16) an der Abgabestelle (13), während sich die Gepäckabgabestation (2) im Gepäckannahmemodus befindet,
- Abführen des mit dem Gepäck (4) beladenen Behälters (16) durch das Abführfördermittel (22), während sich die Gepäckabgabestation (2) im Gepäckabführmodus befindet, wobei während des Abführens des Behälters (16) der Winkel (α) des Behälters (16) bezüglich der Horizontalen verändert wird, sodass der Behälter (16) dadurch wenigstens im Wesentlichen horizontal ausgerichtet wird.

## Revendications

1. Système (3) d'enregistrement de bagages (4) comprenant
- un terminal d'identification de passager (1) pour déterminer une identification de passager d'un passager (5),
- une station de dépôt de bagages (2) pour accepter les bagages (4) du passager (5) à un emplacement de dépôt (13) de la station de dépôt de bagages (2), dans un mode d'acceptation de bagages, et
- un système de convoyage (14) comprenant
- un convoyeur d'évacuation (22) pour évacuer les bagages (4) de l'emplacement de dépôt (13), dans un mode d'évacuation de bagages, et
- des conteneurs (16) ayant une surface de support de bagages (31),
dans lequel la station de dépôt de bagages (2) comprend, à l'emplacement de dépôt (13), un élément de support de conteneur (17) pour supporter un conteneur (16) à charger avec les bagages (4) à l'emplacement de dépôt de bagages (13),
**caractérisé en ce que**
l'élément de support de conteneur (17) est configuré pour orienter le conteneur (16) de sorte que le conteneur (16) soit maintenu selon un angle (α) par rapport à l'horizontale, au moins dans le mode d'acceptation de bagages,
dans lequel, dans le mode d'acceptation de bagages, le conteneur (16) est orienté par l'élément de support de conteneur (17) de sorte que la surface de support de bagages (31) soit dirigée vers un côté avant (42) de la station de dépôt de bagages (2), à partir duquel côté avant (42) le passager (5) doit charger les bagages (4) dans le conteneur (16).

2. Système (3) selon la revendication 1, dans lequel l'élément de support de conteneur (17) est configuré pour orienter le conteneur (16) de sorte que le conteneur (16) soit maintenu selon un angle (α) d'environ 15 à environ 45 degrés, plus préférablement d'environ 20 degrés à environ 35 degrés, par rapport à l'horizontale.

3. Système (3) selon la revendication 1 ou 2, dans lequel l'élément de support de conteneur (17) est pivotant autour d'un axe de pivotement horizontal (45) entre une position inclinée dans laquelle l'élément de support (17) est orienté selon ledit angle (α) par rapport à l'horizontale, et une position neutre dans laquelle l'élément de support (17) est orienté au moins essentiellement horizontalement.

4. Système (3) selon l'une quelconque des revendications précédentes, dans lequel les conteneurs (16) ont une longueur, dans une direction longitudinale du conteneur (16), et une largeur, dans une direction transversale, la largeur étant inférieure à la longueur, les conteneurs (16) ayant de préférence une surface de support de bagages concave (31).

5. Système (3) selon les revendications 3 et 4, dans lequel l'axe de pivotement (45) est aligné avec la direction longitudinale du conteneur (16) au moins lorsqu'il est présent sur l'élément de support de conteneur (17).

6. Système (3) selon l'une quelconque des revendications précédentes, la station de dépôt de bagages (2) comprenant une ouverture comportant une porte (12) qui est déplaçable entre une position ouverte dans laquelle la porte (12) permet l'entrée via l'ouverture à l'emplacement de dépôt (13) pour accepter les bagages (4) du passager (5), dans le mode d'acceptation de bagages, et une position fermée dans laquelle la porte (12) ferme l'ouverture et bloque l'entrée à l'emplacement de dépôt (13), dans le mode d'évacuation de bagages.

7. Système (3) selon la revendication 3 ou une revendication dépendant de celle-ci, dans lequel l'axe de pivotement s'étend en étant aligné avec la direction d'évacuation du conteneur (16) de l'emplacement de dépôt de bagages (13).

8. Système (3) selon l'une quelconque des revendications précédentes, comprenant, à l'emplacement de dépôt (13), un convoyeur formant l'élément de support de conteneur (17), lequel convoyeur est de préférence configuré de manière à pouvoir être entraîné dans deux directions, et lequel convoyeur est relié au convoyeur d'évacuation de bagages (22), dans le but, au moins, d'évacuer vers le convoyeur d'évacuation de bagages (22) un conteneur (16) sur lequel les bagages (4) sont chargés à l'emplacement de dépôt (13).

9. Système (3) selon l'une quelconque des revendications précédentes, comprenant en outre un convoyeur d'alimentation en conteneurs (21) pour alimenter l'emplacement de dépôt de bagages (13) en conteneurs (16).

10. Système (3) selon les revendications 8 et 9, dans lequel le convoyeur est relié au convoyeur d'évacuation de bagages (22) via un convoyeur à commutation (18, 19) qui est agencé pour transférer un conteneur (16) provenant du convoyeur au convoyeur d'évacuation de bagages (22) dans un mode d'évacuation, et qui peut se déplacer entre le mode d'évacuation et un mode d'alimentation dans lequel il est agencé pour transférer un conteneur (16) du convoyeur d'alimentation en conteneurs (21) au convoyeur.

11. Système (3) selon l'une quelconque des revendications précédentes, dans lequel l'élément de support de conteneur fait partie d'une unité de levage (250), pour déplacer l'élément de support de conteneur dans une direction verticale vers l'emplacement de dépôt (13) et à partir de celui-ci, dans lequel, de préférence, l'élément de support de conteneur se trouve à l'emplacement de dépôt (13) dans une position supérieure de l'unité de levage (250) et se relie au convoyeur d'évacuation de bagages (22) dans une position inférieure de l'unité de levage (250).

12. Système (3) selon l'une quelconque des revendications précédentes, dans lequel les conteneurs (16) ont chacun un marqueur lisible par machine tel qu'un marqueur RFID (33), dans lequel le système comprend un lecteur de marqueur (34) pour lire automatiquement le marqueur (33) d'un conteneur (16) qui est fourni à l'emplacement de dépôt (13) de la station de dépôt (2) ou est évacué de celui-ci, dans lequel, de préférence, la station de dépôt (2) est équipée du lecteur de marqueur (34) pour lire le marqueur (33) d'un conteneur (16) à l'emplacement de dépôt (13), de préférence dans lequel le système (3) comprend en outre un dispositif de détermination de présence pour déterminer la présence de bagages (4) dans un conteneur (16) à l'emplacement de dépôt (13).

13. Système (3) selon l'une quelconque des revendications précédentes, dans lequel le terminal d'identification de passager (1) est agencé de manière adjacente à la station de dépôt (2), dans lequel, de préférence, le système (3) comprend en outre un poste d'étiquetage ayant un terminal d'émission d'étiquette pour émettre une étiquette de bagages normalisée sur le plan international, en fonction des informations de passager.

14. Procédé d'enregistrement de bagages (4) d'un passager (5), utilisant un système (3) selon l'une quelconque des revendications précédentes, le procédé comprenant le fait de :
- déterminer, en utilisant le terminal d'informations de passager (1), une identification de passager d'un passager (5),
- alimenter l'emplacement de dépôt de bagages (13) de la station de dépôt (2) en un conteneur vide (16) et d'agencer le conteneur (16) à l'emplacement de dépôt (13) selon un angle (α) par rapport à l'horizontale,
- recevoir les bagages (4) à mesure qu'ils sont déposés par le passager (5), dans le conteneur (16) à l'emplacement de dépôt (13), tandis que la station de dépôt de bagages (2) est dans le mode d'acceptation de bagages,
- évacuer, par le convoyeur d'évacuation (22), le conteneur (16) chargé des bagages (4), tandis que la station de dépôt de bagages (2) est dans le mode d'évacuation de bagages, dans lequel lors de l'évacuation du conteneur (16) l'angle (α) du conteneur (16) par rapport à l'horizontale est modifié de sorte que le conteneur (16) soit orienté au moins essentiellement horizontalement.
